# EUROPEAN PATENT APPLICATION

(11) **EP 4 607 097 A1**
(43) Date of publication of application: **27.08.2025**
(21) Application number: 24382197.2
(22) Date of filing: 23.02.2024
(51) Int. Cl.: F24D 13/02

(54) **INTEGRATED HEATING PANEL**

(71) Applicant: Amax Materiales Technologicos, S.L., 28946 Fuenlabrada (ES)
(72) Inventor: NESTAR BANO, Alberto, 28946 Fuenlabrada (ES); PASTOR TIBURÓN, Carlos, 28946 Fuenlabrada (ES)
(74) Representative: Isern Patentes y Marcas S.L.

(57) **Abstract**

The present invention comprises: a plate (1), with two meandering grooves (6) that house two carbon fibre heating wires (8), to emit infrared radiation; and a coating (11) fixed to the plate (1) over the grooves (6), to distribute heat from the heating wires (8). The grooves (6) extend longitudinally from a first end (2), without reaching a second opposite end (3), to be able to cut the panel to the desired length, as well as extending transversely in each of the two halves of the plate (1), leaving a free central portion, to be able to cut the panel longitudinally in half.

## Description

### Technical field of the invention

The present invention can be included in the construction technology sector, in particular, in the indoor air conditioning sector. More specifically, the object of the invention relates to an integrated heating panel that can be installed on walls, as well as on floors and ceilings, of all types of premises, such as homes, commercial premises, etc.

### Background of the invention

Heating technology for indoor rooms requires a solution that allows heating a room with reduced electricity consumption and maintenance, in addition to being quickly assembled and with the versatility to adapt to the dimensions of the room.

### Description of the invention

The present invention meets the aforementioned requirements by means of an integrated heating panel according to independent claim 1. Other optional features are described in the exemplary embodiment and the dependent claims.

The heating panel of the invention can be installed both in new construction and in renovated buildings, being assembly and maintenance friendly, as well as with reduced consumption.

The heating panel allows heating a room with low energy consumption, as well as being assembly and maintenance friendly, and with adaptability to the room dimensions.

### Brief description of the figures

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows a front schematic representation of the heating panel of the invention.
Figure 2 shows a schematic plan view of the panel of figure 1.

### List of references

- 1: Plate
- 2: First end
- 3: Second end
- 4: Heating face
- 5: Attachment face
- 6: Grooves
- 7: Free area
- 8: Heating wire
- 9: Electrical connections
- 10: Central line
- 11: Coating
- 12: Conductive layer
- 13: Controller

### Detailed description of a preferred embodiment of the invention

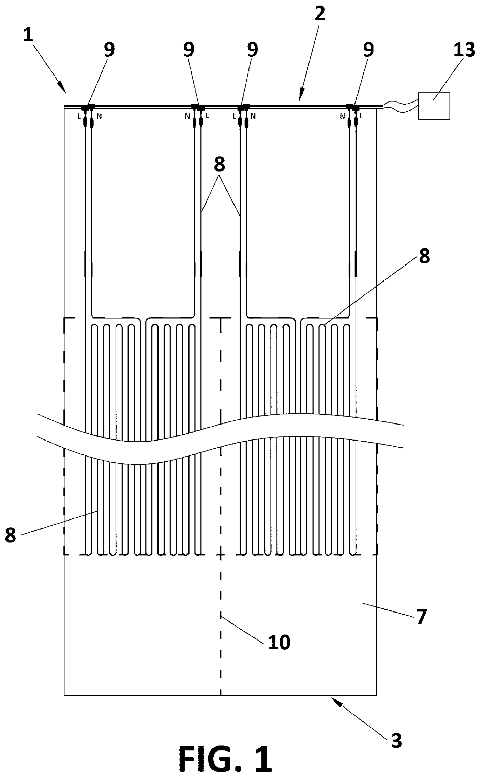

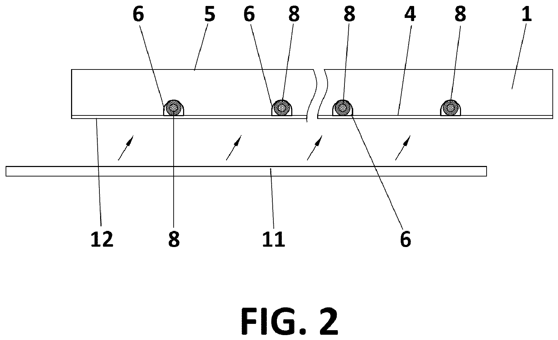

A detailed description of a preferred exemplary embodiment of the heating panel of the invention is provided below, with the aid of Figures 1-2 mentioned above.

The heating panel comprises a plate (1) made of thermal insulating material, such as polyurethane. The plate (1) has a longitudinal dimension, along a longitudinal direction, as well as a transverse dimension, along a transverse direction, and which is smaller than the longitudinal direction. Regarding the longitudinal direction, the plate has a first end (2), and a second end (3), opposite to the first end (2). Moreover, the plate comprises, with respect to a thickness direction, a heating face (4) and an attachment face (5), opposite to the heating face (4), and intended to attach the panel to a flat surface, such as floor, ceiling or wall (not shown).

The plate (1) is grooved. Specifically, the plate (1) comprises, on the heating face (4), two independent meandering grooves (6), which start from, and end at, the first end (2), and extend longitudinally along a portion of the plate (1), that is, without reaching the second end (3), leaving a free area (7) without grooves (6) at the second end (3). A carbon fibre heating wire (8) is housed in each of the grooves (6), which can be connected to electric current through electrical connections (9) that protrude from the plate (1) at the first end (2). The heating wires (8) emit radiation in the infrared range, such as far infrared. Preferably, the heating wires (8) protrude slightly from the grooves (6), to facilitate heat transmission by conduction.

The second end (3) is free of grooves (6) to allow an installer to cut the panel transversely, which allows the length of the panel to be adapted to the requirements of the room that is to be heated by means of the panel.

With respect to the transverse dimension, each of the grooves (6) occupies most of its corresponding half, leaving the central portion of the plate (1) free, where each of the grooves (6) extends to each side of an imaginary central line (10) having a longitudinal direction, leaving a free central portion on both sides of the central line (10), to be able to cut the panel longitudinally in half. In this way, since the panel is divisible into two halves along the longitudinal direction, it will be possible to adapt the width of the panel to the requirements of the room to be heated.

The panel also comprises a coating (11), which is thermally conductive, for example, made of vinyl, which is attached to the plate (1), on the heating side (4), which allows the heat of the heating wires (8) to be distributed on the heating side (4) of the plate (1) and project said heat towards the room. The coating (11), on its outer face, allows meeting decorative requirements of the room.

Preferably, the plate (1) is covered by a thermally conductive layer (12), such as, for example, made of aluminium fibre, sandwiched between the plate (1) and the coating (11), to facilitate a more uniform distribution of the heat flow from the heating wires (8) to the coating (11). The conductive layer (12) can be either sheet type or mesh type. To facilitate heat transmission, the conductive layer (12) is sandwiched without leaving air films or air bubbles.

The panel of the invention can be installed on a wall, on a ceiling or on a floor, in general, on any flat surface, in the same way as a non-heating coating panel. Once installed, the panel simply requires a power outlet to be used.

According to a preferred exemplary embodiment, the panel may further comprise a controller (13) to allow a user to determine the operating parameters of the panel, such as the panel temperature, or the target room temperature.

According to a preferred exemplary embodiment, the panel has dimensions, in millimetres, of 2800 x 1200 x 10. For these dimensions, and with a 220 V connection, the panel consumes 340 W of electrical power. In the panel of the exemplary embodiment, the area free of conductive wire at the second end (3) occupies between 300 - 1000 mm in the longitudinal direction.

The panel in the example can be used in a room temperature range of (-30, +40) °C, as well as it can reach a temperature on the outer surface of the coating of up to 50 °C to avoid burns to users, with a maximum difference of 5 °C between points on the outer face of the coating.

## Claims

1. A heating panel, **characterised in that** it comprises:
- a plate (1) made of thermal insulating material, in which are defined: a longitudinal direction, with a first end (2), and a second end (3), opposite to the first end (2); a transverse direction; and a thickness direction, according to which an attachment face (5), intended to be attached to a flat surface of a room, and a heating face (4), intended to be facing the room to heat the room, are distinguished;
- two independent meandering grooves (6), made in the heating face (4) of the plate (1), which start from, and end at, the first end (2), and which extend along the longitudinal direction, without reaching the second end (3), leaving at the second end (3) a free area (7) without grooves (6), to be able to cut the panel in a transverse direction, as well as extending along the transverse direction, one on each side of a central line (10) having a longitudinal direction, leaving a free central portion on both sides of the central line (10), to be able to cut the panel longitudinally in half;
- two carbon fibre heating wires (8), housed one on each one of the grooves (6), to emit infrared radiation when connected to electric current;
- electrical connections (9), arranged at the first end (2) to connect the heating wires (8) to an electrical power source; and
- a thermally conductive coating (11), attached to the plate (1), on the heating face (4), to distribute heat from the heating wires (8) throughout the heating face (4) of the plate (1) and project said heat towards the room.

2. The heating panel according to claim 1, which additionally comprises a thermally conductive layer (12), sandwiched between the plate (1) and the coating (11), to distribute heat between the plate (1) and the coating (11).

3. The heating panel, according to claim 2, wherein the conductive layer (12) is selected between sheet type or mesh type.

4. The heating panel, according to any of claims 2-3, wherein the conductive layer (12) is sandwiched without leaving air films or air bubbles between the conductive layer (12) and the plate (1).

5. The heating panel, according to any of claims 1-4, wherein the heating wires (8) protrude from the grooves (6).

6. The heating panel, according to any of claims 1-5, wherein the free area (7) without grooves (6) of the second end (3) occupies between 300 - 1000 mm along the longitudinal direction.
